# EUROPEAN PATENT SPECIFICATION

(11) **EP 2 136 961 B1**
(45) Date of publication and mention of the grant of the patent: **08.03.2017**
(21) Application number: 08702227.3
(22) Date of filing: 11.01.2008
(51) Int. Cl.: B23Q 3/00, G01B 5/00

(54) **RE-CONFIGURABLE TOOLING SYSTEM FOR SUPPORTING AND POSITIONING A BODY TO BE MACHINED AND RELATED METHOD FOR CONFIGURING SAID TOOLING SYSTEM**
NEUKONFIGURIERBARES WERKZEUGSYSTEM ZUM ABSTÜTZEN UND POSITIONIEREN EINES ZU BEARBEITENDEN KÖRPERS UND VERWANDTES VERFAHREN ZUR KONFIGURATION DES WERKZEUGSYSTEMS
SYSTÈME D'OUTILLAGE RECONFIGURABLE DESTINÉ À SUPPORTER ET POSITIONNER UN CORPS À USINER, ADAPTÉ EN PARTICULIER POUR ÊTRE MESURÉ ET/OU TESTÉ PAR UNE MACHINE DE MESURE ET UN PROCÉDÉ APPARENTÉ POUR CONFIGURER LEDIT SYSTÈME D'OUTILLAGE

(30) Priority: 22.03.2007 IT TO20070207
(43) Date of publication of application: 30.12.2009
(73) Proprietor: COPROGET S.r.l., 10095 Grugliasco (TO) (IT)
(72) Inventor: ACCOSSATO, Angelo, I-10137 Torino (IT); ACCOSSATO, Claudio, I-10137 Torino (IT); PIEROBON, Andrea, I-10137 TORINO (IT)
(74) Representative: Dini, Roberto
(86) International application number: PCT/IB2008/000064
(87) International publication number: WO 2008/114105

(56) References cited:
- WO-A-2006/097319
- DE-A1- 19 531 520
- DE-A1- 19 707 780

## Description

The present invention relates to a re-configurable type tooling system for supporting and positioning a body to be machined, in particular adapted to be measured and/or tested by a measuring machine, according to the preamble of claim 1.

The present invention also relates to a method for configuring said tooling system.

Tooling systems known in the art generally comprise a reference plane on which a body to be machined is supported and positioned. Said tooling systems also comprise at least one movable device for machining said body, which device is usually provided with a head which may include:
- a feeler device adapted to feel an outer surface of the body to be machined in order to detect the dimensions thereof; or
- a cutting device, in particular comprising a laser or plasma system, for creating internal and/or external profiles of the body to be machined; or
- a welding device, in particular comprising a spot welder, for assembling at least one body to be machined.

It is also known that, in many cases, the step of positioning the body to be machined on the reference plane may be more costly or time-consuming than the machining itself, especially when complex and bulky tooling systems are used.

Moreover, when the body to be machined, in particular to be measured and/or tested, does not have high structural rigidity (such as, for example, automotive glass and sheet-metal panels), it is necessary that the tooling system can support it properly, i.e. without changing its geometry or deforming it.

A first solution is represented by the use of dedicated tooling systems, i.e. elements comprising a plurality of support areas manufactured with special dimensional accuracy and adapted to cooperate with respective portions of the body to be machined, in particular to be measured and/or tested, in order to keep it in a substantially non-deformable configuration. However, dedicated tooling systems suffer from many drawbacks, since they require complex design work and a time-consuming manufacturing process. Furthermore, these systems are very expensive, in that they must be very accurate to fit the body to be machined, and are not flexible at all, because they are designed for supporting specific bodies.

Another known solution used for supporting in a correct way bodies to be machined, in particular to be measured and/or tested, employs re-configurable type tooling systems.

In particular, Italian patent No. IT1206886 describes a tooling system for supporting and positioning a body adapted to be measured and/or tested by a measuring machine, said system comprising:
- a plurality of re-configurable elements, in particular of the column type, comprising a first portion fitted with magnetic stopping means on a reference plane and a second portion which can be moved perpendicularly to said plane and to said first portion;
- moving means for moving said re-configurable elements relative to the reference plane.

In short, in the aforementioned patent both the positioning on the reference plane and the adjustment of the height of the column-type re-configurable elements are carried out automatically by the measuring machine itself, the head of which is equipped with a clamping tool adapted to cooperate with the column-type re-configurable elements for adjusting the height of and positioning said elements on the reference plane.

The above-described tooling system has several drawbacks as well.

In particular, in order to allow for the automatic execution of the operations required for positioning the re-configurable elements on the reference plane, both the column-type reconfigurable elements and the clamping tool fitted to the head of the measuring machine are very complex in terms of mechanical design and circuitry. This inevitably leads to higher cost and fragility of the measuring machine as a whole.

Also, in the above-described tooling system it is the measuring machine itself that configures the tooling system, which consequently is not an autonomous system adapted to be mounted and used on other types of machines and/or for different machining, e.g. like anthropomorphic arms.

Furthermore, since the re-configurable elements are locked on the reference plane magnetically, said reference plane must necessarily be made of a ferromagnetic material and must preferably lack any holes which are generally provided in the reference planes of the measuring machines known in the art. It follows that the above-described tooling system cannot be used on any type of measuring machine known in the art, and is not very suitable to be used in other types of machining, e.g. welding the body to be machined.

Document DE 19531520 also discloses a re-configurable type tooling system.

In this frame, it is the main object of the present invention to overcome the aforementioned drawbacks and to provide a re-configurable type tooling system for supporting and positioning at least one body to be machined, in particular adapted to be measured and/or tested by a measuring machine, which is so designed as to support said at least one body correctly, in particular when it does not have high structural rigidity.

It is another object of the present invention to provide a re-configurable type tooling system which is simple and easy to manufacture, and which can be set up without requiring a time-consuming process.

It is a further object of the present invention to provide a re-configurable type tooling system which is not very costly, which can be easily adapted to the body to be machined, in particular to be measured and/or tested, and which offers high flexibility of use.

It is another object of the present invention to provide a re-configurable type tooling system which can support different types of bodies to be machined, in particular to be measured and/or tested, and wherein the operations for positioning the re-configurable elements on the reference plane can be carried out automatically in a quick and simple manner.

It is a further object of the present invention to provide a re-configurable type tooling system which can be used on any type of machine tool, in particular any type of measuring and/or testing machine, known in the art.

Said objects are achieved by the present invention through a re-configurable type tooling system for supporting and positioning a body to be machined, in particular adapted to be measured and/or tested by a measuring machine, and through a related method for configuring said tooling system incorporating the features set out in the appended claims, which are intended as an integral part of the present description.

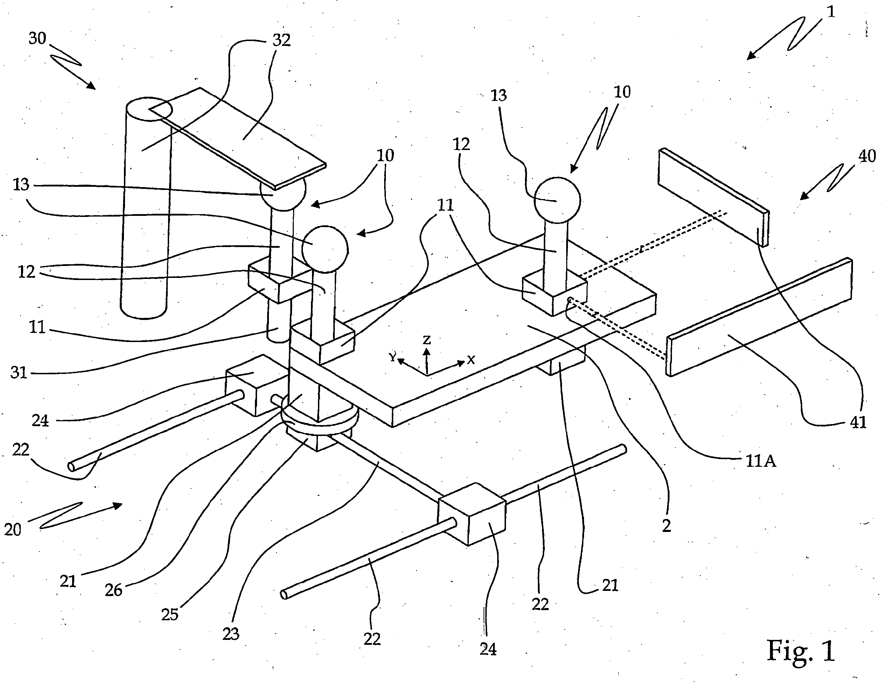

Further objects, features and advantages of the present invention will become apparent from the following detailed description and from the annexed drawing which are supplied by way of non-limiting example, wherein Fig. 1 shows a schematic view of a reconfigurable type tooling system for supporting and positioning a body to be machined, in particular adapted to be measured and/or tested by a measuring machine, according to the present invention.

Referring now to Fig. 1, reference number 1 designates as a whole the re-configurable type tooling system according to the present invention.

Tooling system 1 comprises a reference plane 2 made of any material, even a non-ferromagnetic one, and a movable unit for machining a body, in particular for measuring and/or testing said body, e.g. either of the portal type, adapted to be moved along three axes X, Y and Z, or of the anthropomorphic arm type. In particular, it can be seen in Fig. 1 that X axis and Y axis are horizontal and orthogonal to each another, while Z axis is vertical and orthogonal to a plane defined by X and Y axes.

Neither the movable unit nor the body to be machined, in particular to be measured and/or tested, are shown in Fig. 1.

It is however clear that said movable unit may comprise:
- a feeler device adapted to feel an outer surface of the body to be machined in order to detect the dimensions thereof; or
- a cutting device, in particular comprising a laser or plasma system, for creating internal and/or external profiles of the body to be machined; or
- a welding device, in particular comprising a spot welder, for assembling at least one body to be machined.

Tooling system 1 also comprises a plurality of re-configurable elements 10, in particular of the column type, comprising a first portion 11 suitable for positioning the re-configurable element 10 on the reference plane 2 and fitted with magnetic stopping means, and a second portion 12 which is movable perpendicularly to said reference plane 2 and to said first portion 11.

Tooling system 1 also comprises moving means 20 for moving said re-configurable elements 10 relative to the reference plane 2.

According to the present invention, said moving means comprise a sliding system 20 located under said reference plane 2, said sliding system 20 comprising at least one magnetic element 21 adapted to interact with said magnetic stopping means of said first portion 11 in order to move said re-configurable elements 10 on the reference plane 2. Preferably, said magnetic element 21 comprises an electromagnet which, when electric current is applied to it, generates a magnetic field causing attraction to the magnetic stopping means of first portion 11. Consequently, any displacement of magnetic element 21 located under reference plane 2 causes a corresponding displacement of first portion 11 and of the whole re-configurable element 10 positioned on reference plane 2.

As shown in Fig. 1, in a preferred embodiment of tooling system 1 according to the present invention said sliding system 20 comprises first guiding means 22, which are substantially parallel to a longitudinal axis X of reference plane 2, and second guiding means 23, which are substantially parallel to a latitudinal axis Y of reference plane 2.

In particular, said second guiding means 23 are connected to said first guiding means 22 through at least one first movable head 24 adapted to slide over first guiding means 22. A second movable head 25 sliding over second guiding means 23 comprises an engaging device 26 which allows said magnetic element 21 to be connected to first guiding means 22 and to second guiding means 23.

Said engaging device 26 is preferably a rotary one, i.e. adapted to rotate about said second movable head 25.

It is therefore apparent that first guiding means 22 and magnetic element 21 allow reconfigurable element 10 to be moved along longitudinal axis X of reference plane 2, while second guiding means 23 and magnetic element 21 allow re-configurable element 10 to be moved along latitudinal axis Y of reference plane 2. The use of a rotary engaging device 26 also allows to rotate re-configurable element 10 on reference plane 2.

As shown in Fig. 1, re-configurable element 10 comprises a support portion 13 for supporting and/or locking the body to be machined, in particular to be measured and/or tested.

Tooling system 1 according to the present invention also comprises a control section 30 which allows to adjust the height of support portion 13 in relation to reference plane 2.

Said control section 30 comprises actuating means 31 acting on second portion 12 of reconfigurable element 10 in order to move support portion 13 orthogonally (Z axis) to reference plane 2. Preferably, said actuating means comprise a screwer 31 acting onto a threaded stem (not shown in the drawings) extending inside re-configurable element 10 and allowing the second movable portion 12 to be moved orthogonally to reference plane 2. Control section 30 also comprises measuring means 32 to verify that the height of reconfigurable element 10 matches a predefined value.

It should be pointed out that the adjustment of the height of re-configurable element 10 according to the present invention can also be effected when said re-configurable element 10 is positioned in a suitable point on reference plane 2; in such a condition, reference plane 2 and/or magnetic element 21 shall comprise a hole (not shown in the drawings) which allows said actuating means 31 to pass through for moving the second movable portion 12 of re-configurable element 10.

Tooling system 1 according to the present invention also comprises a positioning section 40 to verify the correct positioning of re-configurable element 10 on reference plane 2.

In particular, said positioning section 40 comprises video and/or laser means 41 which point to a check element 11A of the first portion 11 of re-configurable element 10 (as shown by dashed lines in Fig. 1), thus allowing to verify that the position of said first portion 11 on the longitudinal axis X and on the latitudinal axis Y of the reference plane 2 is correct.

Alternatively, said positioning section 40 may be so conceived as to comprise optical and/or mechanical means (e.g. optical rulers, encoders, etc.) adapted to verify the correct positioning of magnetic element 21 relative to longitudinal axis X and to latitudinal axis Y of reference plane 2; in particular, this design can be implemented whenever the precision degree required for positioning re-configurable elements 10 is not very high, since such a design will not allow to detect any reciprocal positioning errors between said first portion 11 and magnetic element 21.

Tooling system 1 according to the present invention also comprises a control unit (not shown in the drawings) electrically and/or mechanically connected to tooling system 1 and comprising a video terminal and a keyboard for data input; in particular, said control unit is adapted to control and check the movements of the movable components of the tooling system 1, such as sliding system 20 and movable machining unit.

Furthermore, tooling system 1 according to the present invention may advantageously comprise a storage section (not shown in the drawings) adapted to house re-configurable elements 10 when they are not positioned on reference plane 2; preferably, said storage section is located near reference plane 2.

The following will describe a method for configuring a re-configurable-type tooling system 1 for supporting and positioning a body to be machined, said tooling system 1 comprising:
- a reference plane 2;
- a plurality of re-configurable elements 10, in particular of the column type, comprising a first portion 11 fitted with magnetic stopping means and a second portion 12 which can be moved perpendicularly to said reference plane 2 and to said first portion 11; said configuration method comprising a step of positioning the first portion 11 of the reconfigurable element 10 on reference plane 2.

In accordance with the present invention, the configuration method comprises the following steps:
- positioning a magnetic element 21 under reference plane 2 in the area corresponding to said first portion 11;
- activating said magnetic element 21, so that it can interact with said magnetic stopping means of first portion 11;
- moving a sliding system 20 located under said reference plane 2 and comprising said magnetic element 21, thus moving said re-configurable elements 10 along a longitudinal axis X and a latitudinal axis Y of reference plane 2.

According to the present invention, said configuration method also comprises a preliminary step of adjusting the height of a support portion 13 of said re-configurable element 10 in relation to reference plane 2.

Said adjustment step is carried out by activating actuating means 31 acting on second portion 12 of re-configurable element 10 in order to move support portion 13 orthogonally (Z axis) to reference plane 2 until a preset height is reached.

Furthermore, the configuration method according to the present invention comprises an additional step of verifying the correct positioning of re-configurable element 10 on reference plane 2.

In particular, said verification step provides for activating a positioning section 40 comprising video and/or laser means 41 adapted to point to a check element 11 A of first portion 11 of re-configurable element 10 (as shown by dashed lines in Fig. 1), thus allowing to verify that the position of said first portion 11 on the longitudinal axis X and on the latitudinal axis Y of reference plane 2 is correct.

Alternatively, said verification step may provide for activating a positioning section 40 comprising optical and/or mechanical means (e.g. optical rulers, encoders, etc.) adapted to verify the correct positioning of magnetic element 21 relative to longitudinal axis X and latitudinal axis Y of reference plane 2.

The configuration method according to the present invention is preferably carried out through a step of positioning said re-configurable elements 10 according to a predetermined sequence, which allows to verify the correct position of each of said reconfigurable elements 10 by using video and/or laser means 41 of positioning section 40. In particular, said predetermined sequence provides for positioning each re-configurable element 10 in such a manner as to not prevent positioning section 40 from verifying the positioning of re-configurable elements 10 positioned afterwards.

The advantages of a re-configurable type tooling system for supporting and positioning a body to be machined, in particular adapted to be measured and/or tested by a measuring machine, and of a related method for configuring said tooling system according to the present invention are apparent from the above description.

In particular, these advantages consist in the fact that the re-configurable type tooling system according to the present invention is so designed as to support the bodies to be machined, in particular to be measured and/or tested, in an appropriate manner, in particular when the latter do not have high structural rigidity, and that at the same time said system is simple and easy to manufacture and can be set up without requiring a time-consuming process.

A further advantage of the re-configurable type tooling system according to the present invention is that it is not very costly, can be easily adapted to the body to be measured, and offers high flexibility of use.

Another advantage of the re-configurable type tooling system according to the present invention is that it can support different types of bodies to be machined, in particular to be measured and/or tested, and allows to carry out the operations for positioning the reconfigurable elements on the reference plane in a quick and simple manner.

An additional advantage of the re-configurable type tooling system according to the present invention is that it can be used on any type of machine tool, in particular any type of measuring and/or testing machine, known in the art.

The system and method described herein by way of example may be subject to many possible variations without departing from the novelty spirit of the inventive idea; it is also clear that in the practical implementation of the invention the illustrated details may have different shapes or be replaced with other technically equivalent elements.

For example, among many variations, magnetic element 21 may be provided in one piece with engaging device 26. This variant is especially suited to the case wherein reference plane 2 is made of ferromagnetic material; in fact, in such a situation magnetic stopping means of re-configurable element 10 will allow it to be locked onto reference plane 2 without requiring the presence of a magnetic element 21 on the underside of reference plane 2.

It can therefore be easily understood that the present invention is not limited to the above-described system and method, but may be subject to many modifications, improvements or replacements of equivalent parts and elements without departing from the inventive idea, as clearly specified in the following claims.

## Claims

1. Re-configurable type tooling system (1) for supporting and positioning a body to be machined, said tooling system (1) comprising:
- a reference plane (2);
- a plurality of re-configurable elements (10), in particular of the column type, comprising a first portion (11) suitable for positioning the re-configurable element (10) on the reference plane (2) and fitted with magnetic stopping means, and a second portion (12) which is movable perpendicularly to said reference plane (2) and to said first portion (11);
- moving means for moving said re-configurable elements (10) relative to the reference plane (2);
**characterized in that**
said moving means comprise a sliding system (20) located under said reference plane (2), said sliding system (20) comprising at least one magnetic element (21) adapted to interact with said magnetic stopping means of said first portion (11) in order to move said reconfigurable elements (10) on the reference plane (2).

2. Tooling system (1) according to claim 1, **characterized in that** said magnetic element (21) comprises an electromagnet adapted to generate a magnetic field which causes attraction to the magnetic stopping means of the first portion (11).

3. Tooling system (1) according to claim 1, **characterized in that** said sliding system (20) comprises first guiding means (22), which are substantially parallel to a longitudinal axis (X) of the reference plane (2), and second guiding means (23), which are substantially parallel to a latitudinal axis (Y) of the reference plane (2).

4. Tooling system (1) according to claim 3, **characterized in that** said second guiding means (23) are connected to said first guiding means (22) through at least one first movable head (24) adapted to slide over the first guiding means (22).

5. Tooling system (1) according to one or more of claims 3 and 4, **characterized in that** a second movable head (25) slides over said second guiding means (23) comprising an engaging device (26) which allows said magnetic element (21) to be connected to the first guiding means (22) and to the second guiding means (23).

6. Tooling system (1) according to claim 5, **characterized in that** said engaging device (26) is of the rotary type, in particular said engaging device (26) being provided in one piece with said magnetic element (21) and being adapted to rotate on said second movable head (25).

7. Tooling system (1) according to claim 1, **characterized by** comprising a control section (30) which allows to adjust the height of a support portion (13) in relation to the reference plane (2), said support portion (13) being apt to support and/or lock the body to be machined, said control section (30) comprising:
- actuating means (31) acting on the second portion (12) of the re-configurable element (10) in order to move the support portion (13) orthogonally to the reference plane (2);
- measuring means (32) which allow to verify that the height of the re-configurable element (10) matches a predefined value.

8. Tooling system (1) according to claim 1, **characterized by** comprising a positioning section (40) for verifying the correct positioning of the re-configurable element (10) on the reference plane (2).

9. Tooling system (1) according to one or more of the preceding claims, **characterized by** comprising a control unit electrically and/or mechanically connected to the tooling system (1), in particular said control unit comprising a video terminal and a keyboard for data input.

10. Tooling system (1) according to one or more of the preceding claims, **characterized by** comprising a storage section adapted to house the re-configurable elements (10) when they are not positioned on the reference plane (2), in particular said storage section being located near the reference plane (2).

11. Tooling system (1) according to one or more of the preceding claims, **characterized by** comprising a movable unit for machining said body, said movable unit comprising a feeler device and/or a cutting device and/or a welding device.

12. Method for configuring a re-configurable type tooling system (1) for supporting and positioning a body to be machined, said tooling system (1) comprising:
- a reference plane (2);
- a plurality of re-configurable elements (10), in particular of the column type, comprising a first portion (11) fitted with magnetic stopping means and a second portion (12) which can be moved perpendicularly to said reference plane (2) and to said first portion (11);
said configuration method comprising a step of positioning said first portion (11) of the reconfigurable element (10) on the reference plane (2),
said configuration method being **characterized by** comprising the following steps:
- positioning a magnetic element (21) under the reference plane (2) in the area corresponding to said first portion (11);
- activating said magnetic element (21), so that it can interact with said magnetic stopping means of the first portion (11);
- moving a sliding system (20) located under said reference plane (2) and comprising said magnetic element (21), thus moving said re-configurable elements (10) along a longitudinal axis (X) and a latitudinal axis (Y) of the reference plane (2).

13. Configuration method according to claim 12, **characterized by** comprising a preliminary step of adjusting the height of a support portion (13) of said re-configurable element (10) in relation to the reference plane (2), said adjustment step being carried out by activating actuating means (31) acting on the second portion (12) of the re-configurable element (10) in order to move the support portion (13) orthogonally to the reference plane (2) until a preset height is reached.

14. Configuration method according to one or more of claims 12 and 13, **characterized by** comprising an additional step of verifying the correct positioning of the re-configurable element (10) on the reference plane (2).

15. Configuration method according to claim 14, **characterized by** being carried out through a step of positioning said re-configurable elements (10) according to a predetermined sequence, said predetermined sequence providing for positioning each reconfigurable element (10) in such a manner as to allow the positioning section (40) to perform its verification task.

## Patentansprüche

1. Werkzeugsystem vom rekonfigurierbaren Typ (1) zum Tragen und Positionieren eines Körpers, der maschinell bearbeitet wird, wobei das Werkzeugsystem (1) aufweist:
- eine Bezugsebene (2);
- eine Vielzahl von rekonfigurierbaren Elementen (10), insbesondere eines Säulentyps, umfassend einen ersten Abschnitt (11), der geeignet ist, die rekonfigurierbaren Elemente (10) auf der Bezugsebene (2) zu positionieren und mit magnetischen Haltemitteln ausgestattet ist, und einem zweiten Abschnitt (12), der senkrecht zur Bezugsebene (2) und dem ersten Abschnitt (11) beweglich ist;
- Bewegungsmittel zum Bewegen der rekonfigurierbaren Elemente (10) relativ zur Bezugsebene (2);
**dadurch gekennzeichnet, dass**
die Bewegungsmittel ein Gleitsystem (20) aufweisen, das unterhalb der Bezugsebene (2) angeordnet ist, wobei das Gleitsystem (20) mindestens ein Magnetelement (21) aufweist, das angepasst ist, mit den magnetischen Haltemitteln des ersten Abschnittes (11) zu interagieren, um die rekonfigurierbaren Elemente (10) auf der Bezugsebene (2) zu bewegen.

2. Werkzeugsystem (1) nach Anspruch 1, **dadurch gekennzeichnet, dass** das Magnetelement (21) einen Elektromagneten aufweist, der dazu angepasst ist, ein magnetisches Feld zu erzeugen, welches eine Anziehungskraft auf die magnetischen Haltemittel des ersten Abschnittes (11) bewirkt.

3. Werkzeugsystem (1) nach Anspruch 1, **dadurch gekennzeichnet, dass** das Gleitsystem (20) erste Führungsmittel (22) aufweist, welche im Wesentlichen parallel zu einer ersten Längsachse (X) der Bezugsebene (2) sind, und zweite Führungsmittel (23) aufweist, welche im Wesentlichen parallel zu einer Breitenachse (Y) der Bezugsebene (2) sind.

4. Werkzeugsystem (1) nach Anspruch 3, **dadurch gekennzeichnet, dass** die zweiten Führungsmittel (23) mit den ersten Führungsmitteln (22) durch zumindest einen ersten bewegbaren Kopf (24) verbunden sind, der dazu angepasst ist, über die ersten Führungsmittel (22) zu gleiten.

5. Werkzeugsystem (1) nach einem oder mehreren der Ansprüche 3 und 4, **dadurch gekennzeichnet, dass** ein zweiter bewegbarer Kopf (25) über die zweiten Führungsmittel (23) gleitet, welcher eine Eingriffseinrichtung (26) aufweist, die zulässt, dass das magnetische Element (21) mit den ersten Führungsmitteln (22) und den zweiten Führungsmitteln (23) verbunden ist.

6. Werkzeugsystem (1) nach Anspruch 5, **dadurch gekennzeichnet, dass** die Eingriffseinrichtung (26) vom Rotationstyp ist, insbesondere die Eingriffseinrichtung (26) mit dem magnetischen Element (21) in einem Stück vorgesehen und dazu angepasst ist, auf dem zweiten bewegbaren Kopf (25) zu rotieren.

7. Werkzeugsystem (1) nach Anspruch 1, **gekennzeichnet durch** das Vorsehen eines Steuerabschnittes (30), der zulässt, dass die Höhe eines Stützabschnittes (13) in Bezug auf die Bezugsebene (2) angepasst wird, wobei der Stützabschnitt (13) dazu eingerichtet ist, den Körper, der bearbeitet wird, zu tragen und/oder zu arretieren, wobei der Steuerabschnitt (30) aufweist:
- Betätigungsmittel (31), die auf den zweiten Abschnitt (12) des rekonfigurierbaren Elementes (10) einwirken, um den Stützabschnitt (13) orthogonal zur Bezugsebene (2) zu bewegen;
- Messmittel (32), welche ermöglichen zu überprüfen, dass die Höhe des rekonfigurierbaren Elementes (10) mit einem vorgegebenen Wert übereinstimmt.

8. Werkzeugsystem (1) nach Anspruch 1, **gekennzeichnet durch** das Vorsehen eines Positionierungsabschnittes (40) zum Überprüfen der korrekten Positionierung des rekonfigurierbaren Elementes (10) auf der Bezugsebene (2).

9. Werkzeugsystem (1) nach einem oder mehreren der vorhergehenden Ansprüche, **gekennzeichnet durch** das Vorsehen einer Steuereinheit, die elektrisch und/oder mechanisch mit dem Werkzeugsystem (1) verbunden ist, wobei insbesondere die Steuereinrichtung ein Bildschirmgerät und eine Tastatur zur Dateneingabe aufweist.

10. Werkzeugsystem (1) nach einem oder mehreren der vorhergehenden Ansprüche, **gekennzeichnet durch** das Aufweisen eines Speicherabschnittes, der dazu angepasst ist, die rekonfigurierbaren Elemente zu beherbergen, wenn sie nicht auf der Bezugsebene (2) positioniert sind, wobei der Speicherabschnitt insbesondere nahe der Bezugsebene (2) angeordnet ist.

11. Werkzeugsystem (1) nach einem oder mehreren der vorhergehenden Ansprüche, **gekennzeichnet durch** das Aufweisen einer beweglichen Einheit zum Bearbeiten des Körpers, wobei die bewegliche Einheit eine Tastvorrichtung und/oder eine Schneidvorrichtung und/oder eine Schweißvorrichtung aufweist.

12. Verfahren zum Konfigurieren eines Werkzeugsystems (1) vom rekonfigurierbaren Typ zum Tragen und Positionieren eines Körpers, der maschinell bearbeitet wird, wobei das Werkzeugsystem (1) aufweist:
- eine Bezugsebene (2);
- eine Vielzahl von rekonfigurierbaren Elementen (10), insbesondere vom Säulentyp, aufweisend einen ersten Abschnitt (11), der mit magnetischen Haltemitteln ausgestattet ist, und einen zweiten Abschnitt (12), welcher senkrecht zu der Bezugsebene (2) und dem ersten Abschnitt (11) bewegt werden kann;
wobei das Verfahren zum Konfigurieren den Schritt des Positionierens des ersten Abschnittes (11) des rekonfigurierbaren Elementes (10) auf der Bezugsebene (2) umfasst,
wobei das Verfahren zum Konfigurieren **gekennzeichnet ist durch** das Aufweisen der folgenden Schritte:
- Positionieren eines magnetischen Elementes (21) unter der Bezugsebene (2) in einem Bereich korrespondierend mit dem ersten Abschnitt (11),
- Aktivieren des magnetischen Elementes (21), sodass es mit den magnetischen Haltemitteln des ersten Abschnittes (11) interagiert;
- Bewegen eines Gleitsystems (20), das unterhalb der Bezugsebene (2) gelagert ist und das magnetische Element (21) aufweist, somit Bewegen der rekonfigurierbaren Elemente (10) entlang einer Längsachse (X) und einer Breitenachse (Y) der Bezugsebene (2).

13. Verfahren zum Konfigurieren nach Anspruch 12, **gekennzeichnet durch** das Aufweisen eines vorbereitenden Schrittes des Einstellens der Höhe von einem Stützabschnitt (13) des rekonfigurierbaren Elementes (10) im Verhältnis zur Bezugsebene (2), wobei der Schritt des Einstellens **durch** aktivierbare Betätigungsmittel (31) ausgeführt wird, die auf den zweiten Abschnitt (12) des rekonfigurierbaren Elementes (10) einwirken, um den Stützabschnitt (13) senkrecht zur Bezugsebene (2) zu bewegen, bis eine voreingestellte Höhe erreicht ist.

14. Verfahren zum Konfigurieren nach einem oder mehreren der Ansprüche 12 und 13, **gekennzeichnet durch** das Aufweisen eines zusätzlichen Schrittes des Überprüfens der korrekten Positionierung des rekonfigurierbaren Elementes (10) auf der Bezugsebene (2).

15. Verfahren zum Konfigurieren nach Anspruch 14, **gekennzeichnet dadurch, dass** es durch einen Schritt des Positionierens des rekonfigurierbaren Elementes (10) gemäß einer vorbestimmten Reihenfolge ausgeführt wird, wobei die vorbestimmte Reihenfolge das Bereitstellen für die Positionierung jedes rekonfigurierbaren Elementes (10) in einer solchen Weise vorsieht, dass der Positionierungsabschnitt (40) seine Überprüfungsaufgabe ausführt.

## Revendications

1. Système d'outillage du type reconfigurable (1) pour supporter et positionner un corps à usiner, ledit système d'outillage (1) comprenant :
- un plan de référence (2) ;
- une pluralité d'éléments reconfigurables (10), en particulier du type colonne, comprenant une première portion (11) appropriée pour positionner l'élément reconfigurable (10) sur le plan de référence (2) et équipée de moyens d'arrêt magnétiques, et une seconde portion (12) qui est mobile perpendiculairement audit plan de référence (2) et à ladite première portion (11) ;
- des moyens de déplacement pour déplacer lesdits éléments reconfigurables (10) par rapport au plan de référence (2) ;
**caractérisé en ce que**
lesdits moyens de déplacement comprennent un système coulissant (20) situé sous ledit plan de référence (2), ledit système coulissant (20) comprenant au moins un élément magnétique (21) adapté pour interagir avec lesdits moyens d'arrêt magnétiques de ladite première portion (11) afin de déplacer lesdits éléments reconfigurables (10) sur le plan de référence (2).

2. Système d'outillage (1) selon la revendication 1, **caractérisé en ce que** ledit élément magnétique (21) comprend un électroaimant adapté pour générer un champ magnétique qui provoque une attraction vers lesdits moyens d'arrêt magnétiques de la première portion (11).

3. Système d'outillage (1) selon la revendication 1, **caractérisé en ce que** ledit système coulissant (20) comprend des premiers moyens de guidage (22), qui sont sensiblement parallèles à un axe longitudinal (X) du plan de référence (2), et des seconds moyens de guidage (23), qui sont sensiblement parallèles à un axe latitudinal (Y) du plan de référence (2).

4. Système d'outillage (1) selon la revendication 3, **caractérisé en ce que** lesdits seconds moyens de guidage (23) sont reliés auxdits premiers moyens de guidage (22) par l'intermédiaire d'au moins une première tête mobile (24) adaptée pour coulisser sur lesdits premiers moyens de guidage (22).

5. Système d'outillage (1) selon une ou plusieurs des revendications 3 et 4, **caractérisé en ce qu'**une seconde tête mobile (25) coulisse sur lesdits seconds moyens de guidage (23) comprenant un dispositif de mise en prise (26) qui permet audit élément magnétique (21) d'être relié auxdits premiers moyens de guidage (22) et auxdits seconds moyens de guidage (23).

6. Système d'outillage (1) selon la revendication 5, **caractérisé en ce que** ledit dispositif de mise en prise (26) est du type rotatif, en particulier ledit dispositif de mise en prise (26) étant prévu dans une pièce avec ledit élément magnétique (21) et étant adapté pour tourner sur ladite seconde tête mobile (25).

7. Système d'outillage (1) selon la revendication 1, **caractérisé en ce qu'**il comprend une section de commande (30) qui permet de régler la hauteur d'une portion de support (13) par rapport au plan de référence (2), ladite portion de support (13) étant apte à supporter et/ou à verrouiller le corps à usiner, ladite section de commande (30) comprenant :
- des moyens d'actionnement (31) agissant sur la seconde portion (12) de l'élément reconfigurable (10) afin de déplacer la portion de support (13) orthogonalement au plan de référence (2) ;
- des moyens de mesure (32) qui permettent de vérifier que la hauteur de l'élément reconfigurable (10) concorde avec une valeur prédéfinie.

8. Système d'outillage (1) selon la revendication 1, **caractérisé en ce qu'**il comprend une section de positionnement (40) pour vérifier le positionnement correct de l'élément reconfigurable (10) sur le plan de référence (2).

9. Système d'outillage (1) selon une ou plusieurs des revendications précédentes, **caractérisé en ce qu'**il comprend une unité de commande reliée électriquement et/ou mécaniquement au système d'outillage (1), en particulier ladite unité de commande comprenant un terminal vidéo et un clavier pour l'entrée de données.

10. Système d'outillage (1) selon une ou plusieurs des revendications précédentes, **caractérisé en ce qu'**il comprend une section de stockage adaptée pour loger les éléments reconfigurables (10) lorsqu'ils ne sont pas positionnés sur le plan de référence (2), en particulier ladite section de stockage étant située à proximité du plan de référence (2).

11. Système d'outillage (1) selon une ou plusieurs des revendications précédentes, **caractérisé en ce qu'**il comprend une unité mobile pour usiner ledit corps, ladite unité mobile comprenant un dispositif palpeur et/ou un dispositif de découpe et/ou un dispositif de soudage.

12. Procédé pour configurer un système d'outillage du type reconfigurable (1) pour supporter et positionner un corps à usiner, ledit système d'outillage (1) comprenant :
- un plan de référence (2) ;
- une pluralité d'éléments reconfigurables (10), en particulier du type colonne, comprenant une première portion (11) équipée de moyens d'arrêt magnétiques et une seconde portion (12) qui peut être déplacée perpendiculairement audit plan de référence (2) et à ladite première portion (11) ;
ledit procédé de configuration comprenant une étape de positionnement de ladite première portion (11) de l'élément reconfigurable (10) sur le plan de référence (2),
ledit procédé de configuration étant **caractérisé en ce qu'**il comprend les étapes suivantes :
- le positionnement d'un élément magnétique (21) sous le plan de référence (2) dans la zone correspondante à ladite première portion (11) ;
- l'activation dudit élément magnétique (21), de sorte qu'il puisse interagir avec lesdits moyens d'arrêt magnétique de la première portion (11) ;
- le déplacement d'un système coulissant (20) situé sous ledit plan de référence (2) et comprenant ledit élément magnétique (21), déplaçant ainsi lesdits éléments reconfigurables (10) le long d'un axe longitudinal (X) et d'un axe latitudinal (Y) du plan de référence (2).

13. Procédé de configuration selon la revendication 12, **caractérisé en ce qu'**il comprend une étape préliminaire de réglage de la hauteur d'une portion de support (13) dudit élément reconfigurable (10) par rapport au plan de référence (2), ladite étape de réglage étant réalisée en activant des moyens d'actionnement (31) agissant sur la seconde portion (12) de l'élément reconfigurable (10), afin de déplacer la portion de support (13) orthogonalement au plan de référence (2) jusqu'à ce qu'une hauteur préétablie soit atteinte.

14. Procédé de configuration selon une ou plusieurs des revendications 12 et 13, **caractérisé en ce qu'**il comprend une étape supplémentaire de vérification du positionnement correct de l'élément reconfigurable (10) sur le plan de référence (2).

15. Procédé de configuration selon la revendication 14, **caractérisé en ce qu'**il est réalisé par une étape de positionnement desdits éléments reconfigurables (10) selon une séquence prédéterminée, ladite séquence prédéterminée assurant le positionnement de chaque élément reconfigurable (10) de manière à permettre à la section de positionnement (40) d'effectuer sa tâche de vérification.
